# EUROPEAN PATENT APPLICATION

(11) **EP 4 647 208 A1**
(43) Date of publication of application: **12.11.2025**
(21) Application number: 24892470.6
(22) Date of filing: 06.08.2024
(51) Int. Cl.: B23K 37/04

(54) **PRESSING-PLATE REPLACEMENT DEVICE, WELDING APPARATUS AND PRESSING-PLATE REPLACEMENT METHOD**

(30) Priority: 13.03.2024 CN 202410285347
(71) Applicant: Contemporary Amperex Technology Co., Limited, Jiaocheng District Ningde Fujian 352100 (CN)
(72) Inventor: WANG, Tengteng, Ningde, Fujian 352100 (CN); YU, Xinglu, Ningde, Fujian 352100 (CN); QUE, Tianxiang, Ningde, Fujian 352100 (CN)
(74) Representative: Herrmann, Uwe
(86) International application number: PCT/CN2024/110074
(87) International publication number: WO 2025/189662

(57) **Abstract**

A pressing plate replacing apparatus, a welding device, and a pressing plate replacing method are disclosed in the present disclosure. The pressing plate replacing apparatus is configured to replace a pressing plate installed on a welding device. The pressing plate replacing apparatus includes a gripping mechanism, a material rack, and a rotating mechanism. The gripping mechanism is configured to grip the pressing plate, and the gripping mechanism is capable of reciprocating in a first direction. The material rack is located at one side of the welding device in the first direction, and the material rack includes a feed rack configured to store unused pressing plates and a return rack configured to recycle used pressing plates. The rotating mechanism is connected to the material rack and is configured to drive the material rack to rotate. The material rack, driven by the rotating mechanism, is capable of being switched between a first position and a second position. When the material rack is in the first position, the feed rack faces the gripping mechanism. When the material rack is in the second position, the return rack faces the gripping mechanism.

## Description

### CROSS-REFERENCE TO RELATED APPLICATIONS

The present disclosure is based upon and claims priority to Chinese Patent Application No. 202410285347.9, filed on March 13, 2024 and entitled "PRESSING PLATE REPLACING APPARATUS, WELDING DEVICE, AND PRESSING PLATE REPLACING METHOD", which is incorporated by reference in its entirety.

### TECHNICAL FIELD

The present disclosure relates to the field of battery manufacturing technologies, and in particular, to a pressing plate replacing apparatus, a welding device, and a pressing plate replacing method.

### BACKGROUND

New energy batteries are increasingly widely applied in life and industry. For example, new energy vehicles equipped with batteries have been widely used. In addition, batteries are increasingly used in the fields of energy storage and the like.

Welding is a relatively important process in a battery production and manufacturing process. During welding, a pressing plate is usually required to press and tighten a workpiece to be welded. During the use of the pressing plate, it may gradually be contaminated by impurities such as splashing welding slag, thereby affecting the welding quality. Therefore, the pressing plate needs to be replaced regularly. In the related art, the replacement is usually performed manually, which is inefficient. Therefore, how to replace the pressing plate in an automated manner to improve the operating efficiency is one of research topics in the industry.

### SUMMARY OF THE INVENTION

In order to solve the above technical problems, the present disclosure provides a pressing plate replacing apparatus, a welding device, and a pressing plate replacing method, which are capable of simply and quickly replacing a pressing plate in an automated manner.

The present disclosure is implemented through the following technical solutions.

A first aspect of the present disclosure provides a pressing plate replacing apparatus. The pressing plate replacing apparatus is configured to replace a pressing plate installed on a welding device, and the pressing plate replacing apparatus includes: a gripping mechanism configured to grip the pressing plate, the gripping mechanism being capable of reciprocating in a first direction; a material rack located on one side of the welding device in the first direction, the material rack including a feed rack configured to store unused pressing plates and a return rack configured to recycle used pressing plates; and a rotating mechanism, the rotating mechanism being connected to the material rack and configured to drive the material rack to rotate; where the material rack, driven by the rotating mechanism, is capable of being switched between a first position and a second position, when the material rack is in the first position, the feed rack faces the gripping mechanism, and when the material rack is in the second position, the return rack faces the gripping mechanism.

The pressing plate replacing apparatus includes the gripping mechanism and the material rack, the material rack is located on one side of the welding device in the first direction, and the gripping mechanism is capable of reciprocating in the first direction; therefore, the gripping mechanism is capable of gripping the pressing plate and reciprocating between an installation position of the pressing plate and the material rack, thereby replacing the pressing plate in an automated manner.

In addition, the material rack includes the feed rack and the return rack, and the pressing plate replacing apparatus further includes a rotating mechanism; therefore, the rotating mechanism is capable of driving the material rack to rotate between the first position in which the feed rack faces the gripping mechanism and the second position in which the return rack faces the gripping mechanism, thereby switching between the feed rack and the return rack can be achieved only by simple rotation. The control method is simple and the switching is easy, which is more convenient for the gripping mechanism to grip an unused new pressing plate on the feed rack or to recycle a used pressing plate to the return rack, thereby effectively improving the replacement efficiency. Furthermore, when replacing a pressing plate, it is only necessary to stop operation of the pressing plate to be replaced, without shutting down the entire device, which is capable of effectively improving the operating efficiency.

In some embodiments, the material rack includes a bottom plate, a first position-limiting member, and a second position-limiting member, and the first position-limiting member and the second position-limiting member extend in a third direction perpendicular to the first direction and are arranged on the bottom plate. The first position-limiting member and a portion of the bottom plate define the feed rack, and the second position-limiting member and a portion of the bottom plate define the return rack.

Therefore, the first position-limiting member and the second position-limiting member are capable of playing a certain position-limiting role on the pressing plate placed on the material rack, thereby reducing the possibility of the pressing plate falling from the material rack. In addition, the first position-limiting member and the second position-limiting member extend in the third direction, and therefore, the pressing plates accommodated in the material rack are capable of being stacked in the third direction, so that the material rack is capable of accommodating more pressing plates.

In some embodiments, there are two first position-limiting members, the two first position-limiting members are arranged on the bottom plate at an interval in a second direction, and each of the first position-limiting members includes two first columns arranged at an interval in the first direction, the size of one first column in the third direction being larger than the size of the other first column in the third direction; and/or there are two second position-limiting members, the two second position-limiting members are arranged on the bottom plate at an interval in the second direction, and each of the second position-limiting members includes two second columns arranged at an interval in the first direction, the size of one second column in the third direction being larger than the size of the other second column in the third direction; where the second direction is perpendicular to both the first direction and the third direction.

Therefore, the gripping mechanism is capable of gripping a pressing plate or placing a pressing plate from the side of the column shorter in size in the third direction, so that the column may not interfere with the gripping mechanism, which is more convenient for the gripping and placing operations of the gripping mechanism. At the same time, the column longer in size in the third direction may also play a good position-limiting role on the pressing plate, so that the pressing plate is less likely to fall off the material rack in the gripping or placing process.

In some embodiments, the first column longer in size in the third direction in the first position-limiting member and the second column longer in size in the third direction in the second position-limiting member are arranged close to each other in the first direction; the first column shorter in size in the third direction in the first position-limiting member and the second column shorter in size in the third direction in the second position-limiting member are arranged away from each other in the first direction.

Therefore, no matter the material rack is in the first position or the second position, the columns shorter in size in the third direction are capable of being close to the gripping mechanism, and the columns longer in size in the third direction are capable of being away from the gripping mechanism, thereby facilitating the gripping mechanism to grip or place the pressing plate and making it less likely for the pressing plate to fall when being gripped or placed.

In some embodiments, the first column and the second column are each provided with a groove extending in the third direction, a plurality of balls are rotatably arranged in the groove, each of the balls is at least partially exposed to the groove, and the exposed portion of each of the balls is used to contact with a side surface of the pressing plate.

As a result, the pressing plates stacked in the material rack are capable of moving more smoothly in the third direction, the pressing plates are less likely to get stuck during movement, thereby being convenient for the gripping mechanism to grip or place the pressing plates.

In some embodiments, the bottom plate, the first position-limiting member, and the second position-limiting member are formed into an integrated structure.

In this way, it is capable of reducing the quantity of parts, lowering the difficulty in assembling, and making the overall structure of the material rack more stable.

In some embodiments, the feed rack and the return rack are each provided with an avoidance opening extending in the third direction. The pressing plate replacing apparatus further includes a lifting mechanism, the lifting mechanism being located below the material rack, the avoidance opening being configured to allow a lifting head of the lifting mechanism to pass through, and the lifting head being configured to support the pressing plate so as to lift the pressing plate of the feed rack or to receive the pressing plate recycled to the return rack.

Therefore, when the gripping mechanism needs to grip the pressing plate from the feed rack, the lifting head of the lifting mechanism is capable of being raised in the third direction, passing through the avoidance opening of the feed rack, and lifting the pressing plate in the feed rack to the vicinity of the gripping mechanism, thereby facilitating the gripping operation of the gripping mechanism. When the gripping mechanism needs to place the pressing plate on the return rack, the lifting head of the lifting mechanism is also capable of being raised in the third direction, passing through the avoidance opening of the return rack, and being raised to the vicinity of the gripping mechanism to support the pressing plate, thereby reducing the possibility of damage to the pressing plate caused by the pressing plate failing to be placed in the return rack or directly falling into the return rack.

In some embodiments, the pressing plate replacing apparatus further includes a guide rail, the guide rail extends in the first direction, and the gripping mechanism is arranged on the guide rail in a manner of being capable of moving along the guide rail under the drive of a first driving apparatus.

Therefore, the gripping mechanism is capable of realizing reciprocating motion in the first direction by cooperating with the guide rail, which has a simple structure and ingenious design. In addition, arranging the guide rail is capable of reducing friction and shaking when the gripping mechanism moves in the first direction, thereby making the movement of the gripping mechanism smoother and more stable, more reliable, and with less energy consumption, which is more conducive to energy saving and environmental protection.

In some embodiments, the gripping mechanism includes a clamping jaw, and the clamping jaw includes two clamp plates arranged oppositely in the third direction, the two clamp plates are capable of approaching or moving away from each other oppositely in the third direction under the drive of a first clamping driving apparatus, an operation of clamping the pressing plate is performed by the approaching action, and an operation of releasing the pressing plate is performed by the moving away action. The third direction is perpendicular to the first direction.

The clamping jaw includes two clamp plates, and the two clamp plates are capable of oppositely approaching or moving away from each other in the third direction; therefore, the clamping and releasing actions of the clamping jaw are capable of being achieved with a simple structure and simple actions. Moreover, the gripping mechanism realizes gripping or releasing by the two clamp plates approaching or moving away from each other, and therefore, it is capable of adapting to pressing plates of different dimensions by adjusting a distance between the two clamp plates when they approach or move away from each other, thereby having good compatibility and being conducive to flexible production.

In some embodiments, each of the clamp plates includes a clamp surface, and the two clamp surfaces are respectively configured to contact with two surfaces of the pressing plate opposite to each other in the third direction. A first position-limiting portion is formed on at least one clamp surface of the two clamp surfaces, and the first position-limiting portion is configured to cooperate with the pressing plate during clamping of the pressing plate.

Therefore, the clamp operation can be achieved only by the contact between the clamp surfaces and the surfaces of the pressing plate, the structure is simple, and the control method is easy. In addition, the first position-limiting portion is further formed on the clamp surface, and therefore, the clamp plates are capable of being made more stable when clamping the pressing plate, thereby reducing the possibility of the pressing plate falling during the clamping.

In some embodiments, the clamping jaw is capable of reciprocating between a retreat position and an operation position in the second direction under the drive of a second driving apparatus. The second direction is perpendicular to both the first direction and the third direction.

Therefore, the clamping jaw is capable of moving forward in the second direction to the operation position to clamp the pressing plate when the pressing plate needs to be replaced, and retreating in the second direction to the retreat position after the pressing plate is replaced or when the pressing plate does not need to be replaced, which does not interfere with the pressing plate, thereby improving the reliability and stability of the pressing plate during operation.

A second aspect of the present disclosure provides a welding device, and the welding device includes: a rack; a welding apparatus arranged on the rack, the welding apparatus including a laser head and a pressing plate; at least one clamping apparatus arranged on the rack, the clamping apparatus being configured to clamp and fix the pressing plate; and the pressing plate replacing apparatus according to the first aspect of the present disclosure, which is configured to replace the pressing plate.

Therefore, when a pressing plate needs to be replaced, the pressing plate replacing apparatus of the welding device is capable of gripping the pressing plate located at the clamping apparatus, moving in a first direction to a material rack, releasing the pressing plate and placing it in the return rack, then gripping a new pressing plate from a feed rack, and moving in the first direction to the clamping apparatus, thereby completing the replacement of the pressing plate in an automated manner, and reducing the possibility that the pressing plate may be contaminated by welding slag during welding due to long-term use to thereby affect the welding quality.

In some embodiments, the welding device further includes a controller. The controller is configured to control the gripping mechanism of the pressing plate replacing apparatus to replace a pressing plate when the number of uses of the pressing plate reaches a preset number of times; or the controller is configured to control the gripping mechanism of the pressing plate replacing apparatus to replace the pressing plate when the welding device fails in welding consecutively for a preset number of times.

Therefore, the welding device is capable of automatically determining, through the controller, whether the pressing plate needs to be replaced, and when the pressing plate needs to be replaced, the pressing plate replacing apparatus is controlled to automatically replace the pressing plate without the need for manual real-time monitoring, thereby making the welding device more automated and the replacement efficiency higher.

In some embodiments, the clamping apparatus includes two clamping members arranged oppositely in a second direction, the two clamping members are capable of approaching or moving away from each other oppositely in the second direction under the drive of a second clamping driving apparatus, an operation of clamping the pressing plate is performed by the approaching action, and an operation of releasing the pressing plate is performed by the moving away action. The second direction is perpendicular to the first direction.

Therefore, when the pressing plate is in an operation state, the clamping operation is capable of being performed by the action of the two clamping members of the clamping apparatus approaching each other oppositely, so that the pressing plate is capable of being stably fixed on the welding device, and a good clamping operation is achieved during the welding. When the pressing plate is in a to-be-replaced state, the gripping mechanism of the pressing plate replacing apparatus may grip the pressing plate. After the gripping mechanism grips the pressing plate, the two clamping members are capable of moving away from each other oppositely to release the pressing plate, thereby facilitating the gripping mechanism to transport the used pressing plate to the return rack for recycling.

In some embodiments, each of the clamping members includes a clamping surface, and the two clamping surfaces are respectively configured to contact with two surfaces of the pressing plate opposite to each other in the second direction. A second position-limiting portion is formed on each of the two clamping surfaces, and the second position-limiting portion is configured to cooperate with the pressing plate during clamping of the pressing plate.

Therefore, the clamping operation can be achieved only by the contact between the clamping surfaces and the surfaces of the pressing plate, the structure is simple, and the control method is easy. In addition, the second position-limiting portion is formed on the clamping surface, and therefore, it is capable of further improving the reliability of the clamping apparatus, and reducing the possibility of the pressing plate falling off when clamped, thereby improving the stability of the pressing plate during operation and obtaining a good welding effect.

A third aspect of the present disclosure provides a pressing plate replacing method, which uses a pressing plate replacing apparatus to replace a pressing plate installed on a welding device, the pressing plate replacing apparatus including a gripping mechanism, a material rack, and a rotating mechanism, the gripping mechanism being capable of reciprocating in a first direction, the material rack including a feed rack configured to store pressing plates and a return rack configured to recycle used pressing plates, the rotating mechanism being connected to the material rack, the material rack, driven by the rotating mechanism, being capable of being switched between a first position and a second position, when the material rack is in the first position, the feed rack facing the gripping mechanism, and when the material rack is in the second position, the return rack facing the gripping mechanism; the pressing plate replacing method includes: a gripping step, where the gripping mechanism grips the used pressing plate installed on the welding device; a recycling step, where the gripping mechanism gripping the used pressing plate moves in the first direction to the material rack, the rotating mechanism drives the material rack to rotate to the second position, and the gripping mechanism places the pressing plate to be replaced on the return rack; a loading step, where the rotating mechanism drives the material rack to rotate to the first position, and the gripping mechanism grips the pressing plate in the feed rack; and a replacing step, where the gripping mechanism moves in the first direction back to a pressing plate installation position of the welding device to complete the replacement of the pressing plate.

Therefore, the pressing plate is capable of being replaced in an automated manner, the structure is simple, the control method is easy, and it is conducive to improving the efficiency of pressing plate replacement.

In some embodiments, the feed rack and the return rack are each provided with an avoidance opening. The pressing plate replacing apparatus includes a lifting mechanism, and the lifting mechanism is located below the material rack; and before the recycling step and/or before the loading step, the pressing plate replacing method further includes: a lifting step, where a lifting head of the lifting mechanism is raised to pass through the avoidance opening in a third direction to reach a predetermined position; the third direction being perpendicular to the first direction.

Therefore, before the loading step is performed, it is capable of raising the lifting head of the lifting mechanism to the predetermined position in the third direction, thereby lifting the pressing plate in the feed rack to the gripping mechanism, which is convenient for the gripping mechanism to grip a new pressing plate. Moreover, before the recycling step is performed, it is also capable of raising the lifting head of the lifting mechanism to the predetermined position in the third direction to support the pressing plate, thereby reducing the possibility of damage to the pressing plate caused by the pressing plate failing to be placed in the return rack or directly falling into the return rack.

In some embodiments, before the gripping step, the pressing plate replacing method further includes: a determining step of determining whether the number of uses of the pressing plate reaches a preset number of uses, and if the preset number of uses is reached, determining that the pressing plate is a pressing plate to be replaced, and performing the gripping step; or, determining whether the welding device fails in welding consecutively for a preset number of times, and if the welding fails consecutively for the preset number of times, determining that the pressing plate is a pressing plate to be replaced, and performing the gripping step.

Therefore, it is capable of determining, according to the determination result, whether the pressing plate being used needs to be replaced, and when the pressing plate needs to be replaced, the pressing plate replacing apparatus is controlled to automatically replace the pressing plate without the need for manual real-time monitoring, thereby making the welding device more automated and the replacement efficiency higher.

### Invention Effects

By means of the present disclosure, a pressing plate replacing apparatus, a welding device, and a pressing plate replacing method are provided, which are capable of simply and quickly replacing a pressing plate in an automated manner.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present disclosure. Moreover, in all of the drawings, the same components are indicated by the same reference numerals. In the drawings:
FIG. 1 is a schematic diagram of a three-dimensional structure of a welding device according to some embodiments of the present disclosure;
FIG. 2 is a schematic diagram of a planar structure of a welding device according to some embodiments of the present disclosure;
FIG. 3 is a schematic diagram of another planar structure of a welding device according to some embodiments of the present disclosure;
FIG. 4 is a schematic diagram of a three-dimensional structure of a material rack and a rotating mechanism according to some embodiments of the present disclosure;
FIG. 5 is a schematic diagram of a planar structure of a material rack and a rotating mechanism according to some embodiments of the present disclosure;
FIG. 6 is a partially enlarged diagram of a gripping mechanism according to some embodiments of the present disclosure;
FIG. 7 is a schematic diagram of a three-dimensional structure of a pressing plate according to some embodiments of the present disclosure;
FIG. 8 is a schematic diagram of a planar structure of a pressing plate according to some embodiments of the present disclosure;
FIG. 9 is a schematic diagram of a three-dimensional partial structure of a clamping apparatus according to some embodiments of the present disclosure;
FIG. 10 is a first schematic flowchart of a pressing plate replacing method according to some embodiments of the present disclosure;
FIG. 11 is a second schematic flowchart of a pressing plate replacing method according to some embodiments of the present disclosure;
FIG. 12 is a third schematic flowchart of a pressing plate replacing method according to some embodiments of the present disclosure; and
FIG. 13 is a fourth schematic flowchart of a pressing plate replacing method according to some embodiments of the present disclosure.

### List of reference numerals

1-Gripping mechanism; 11-Clamping jaw; 12-Moving platform; 111-Clamp plate; 1111-Clamp surface; 1112-First position-limiting portion; 2-Material rack; 21-Feed rack; 22-Return rack; 23-Bottom plate; 24-First position-limiting member; 241-First column; 25-Second position-limiting member; 251-Second column; 26-Crossbeam; 27-Groove; 28-Ball; 29-Avoidance opening; 3-Rotating mechanism; 4-Lifting mechanism; 41-Lifting head; 5-Guide rail; 10-Pressing plate replacing apparatus; 20-Rack; 30-Welding apparatus; 301-Pressing plate; 3011-Hole groove; 3012-Hole; 40-Clamping apparatus; 401-Clamping member; 4011-Clamping surface; 4012-Second position-limiting portion; 100-Welding device.

### DETAILED DESCRIPTION

Examples of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art in the present disclosure. The terms used herein are intended only for the purpose of describing specific embodiments and are not intended to limit the present disclosure. The terms "including" and "having" and any variants thereof in the present disclosure are intended to cover non-exclusive inclusion.

In the description of the embodiments of the present disclosure, the technical terms "first", "second", "third", and the like are only used for distinguishing different objects, and cannot be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present disclosure, the technical terms "length", "width", "thickness", "upper", "lower", "front", "rear", "left", "right", "vertical", "horizontal", "top", "bottom", "inner", "outer", and the like indicate orientations or positional relationships based on the orientations or positional relationships shown in the drawings, and are intended only to facilitate and simplify the description of the embodiments of the present disclosure, and are not intended to indicate or imply that the device or element referred to must have a particular orientation, or be constructed, operated, or used in a particular orientation, and therefore should not be construed as limitation of the embodiments of the present disclosure.

In the description of the embodiments of the present disclosure, unless otherwise expressly specified and defined, the technical terms "installed", "linked", "connected", "fixed", and the like are to be understood broadly, and may, for example, be fixedly connected or detachably connected, or integrated; and may also be mechanically connected or electrically connected; and may be directly linked or indirectly linked through an intermediate medium, and may be internal communication or interaction between two elements. For those of ordinary skill in the art, the specific meanings of the above terms in the embodiments of the present disclosure can be understood according to specific situations.

In the description of the embodiments of the present disclosure, unless otherwise expressly specified and defined, the technical term "contact" shall be understood in a broad sense, either as direct contact, as contact across an intermediate medium layer, as contact between the two in contact that is substantially free of interaction force, or as contact with interaction force between the two in contact.

In the following, the present disclosure will be described in detail.

At present, new energy batteries are increasingly used in daily life and industry. The new energy batteries are not only applied in energy storage power supply systems such as water power, fire power, wind power, and solar power stations, but also widely applied in electric transportation tools, such as electric bicycles, electric motorcycles and electric vehicles, as well as many fields, such as aerospace. With the continuous expansion of the application field of power batteries, the demand in the market is also constantly expanding.

In the production and manufacturing process of batteries, welding has always been one of important processes in the battery production process. There are many workpieces that need to be welded. For example, it is needed to weld a tab and an adapter plate, weld the adapter plate and a pole of a top cover, weld the pole and a bus component, and the like. During the welding operation, a pressing plate is usually required to press and tighten a workpiece to be welded to reduce the possibility that the workpiece moves relative to a welding apparatus or workpieces moves relative to each other, which may affect the quality of the welding. During use, the pressing plate may gradually be contaminated by impurities such as splashing welding slag, and needs to be replaced and cleaned regularly. If the pressing plate cannot be replaced in time, it may cause adverse conditions such as false welding, thus affecting the welding quality.

In the related art, the pressing plate is usually replaced manually, which has a low degree of automation, and manual disassembling and installation is time-consuming and labor-intensive. The device needs to be shut down when replacing the pressing plate, thereby reducing the operating efficiency of the production line. In addition, the pressing plate replacing operation is usually carried out above the workpiece to be welded or near the workpiece to be welded. Manual pressing plate replacement may have the risk of misoperation, so that the pressing plate may fall onto the workpiece to be welded during the replacement to cause damage to or contamination on the workpiece, or the newly replaced pressing plate may fall and be contaminated with dust, welding slag, and other impurities, which requires the pressing plate to be replaced again, thereby increasing production costs and reducing the production efficiency.

In view of the problems existing in the above related technologies, the present disclosure proposes a pressing plate replacing apparatus. The pressing plate replacing apparatus is configured to replace a pressing plate installed on a welding device. The pressing plate replacing apparatus includes a gripping mechanism, a material rack, and a rotating mechanism. The gripping mechanism is configured to grip the pressing plate, and the gripping mechanism is capable of reciprocating in a first direction. The material rack is located at one side of the welding device in the first direction, and the material rack includes a feed rack configured to store unused pressing plates and a return rack configured to recycle used pressing plates. The rotating mechanism is connected to the material rack and is configured to drive the material rack to rotate. The material rack, driven by the rotating mechanism, is capable of being switched between a first position and a second position. When the material rack is in the first position, the feed rack faces the gripping mechanism. When the material rack is in the second position, the return rack faces the gripping mechanism.

The pressing plate replacing apparatus in the embodiment of the present disclosure includes the gripping mechanism for gripping the pressing plate and the material rack for storing or recycling the pressing plate, the material rack is located on one side of the welding device in the first direction, and the gripping mechanism is capable of reciprocating in the first direction. Therefore, the gripping mechanism is capable of gripping the pressing plate and reciprocating between an installation position of the pressing plate and the material rack, so that the pressing plate is capable of being replaced in an automated manner. Moreover, when replacing the pressing plate, it is only necessary to stop the pressing plate to be replaced, without shutting down the entire device, which is capable of effectively improving the operation efficiency.

In addition, the material rack includes the feed rack and the return rack, and the pressing plate replacing apparatus further includes a rotating mechanism; therefore, the rotating mechanism is capable of driving the material rack to rotate between the first position in which the feed rack faces the gripping mechanism and the second position in which the return rack faces the gripping mechanism, thereby switching between the feed rack and the return rack can be achieved only by simple rotation. The control method is simple and the switching is easy, which is more convenient for the gripping mechanism to grip an unused new pressing plate on the feed rack or to recycle a used pressing plate to the return rack, thereby effectively improving the replacement efficiency.

The pressing plate replacing apparatus in the embodiment of the present disclosure can be used in a production process of a battery, for example, to replace a pressing plate that is used for pressing and tightening during welding of an adapter plate and a pole of a top cover of the battery. Of course, those skilled in the art should understand that the pressing plate replacing apparatus provided in the embodiment of the present disclosure is not only configured to replace various pressing plates in the welding process during the battery production and manufacturing process, but can also be configured to replace pressing plates in other processes of other production lines.

In an embodiment of the present disclosure, the battery may be a battery cell.

The battery cell refers to a basic unit that can realize mutual conversion of chemical energy and electrical energy, and may be used to make a battery module or a battery pack to provide power to an electrical apparatus.

The battery cell may be a secondary battery, and the secondary battery refers to a battery cell that can be used continually by activating an active material in a charging manner after the battery cell is discharged.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickelcadmium battery, a lead storage battery, or the like, which is not limited in the embodiments of the present disclosure.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the battery cell further includes an electrolyte, and the electrolyte plays a role in conducting ions between the positive electrode and the negative electrode. The type of the electrolyte is not specifically limited in the present disclosure, and may be selected according to needs. The electrolyte may be in a liquid state, a gel state or a solid state.

In some embodiments, the battery cell may include a shell. The shell is configured to encapsulate components, such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square battery cell, a blade battery cell, and a multi-prism battery. For example, the multi-prism battery may be a hexagonal prism battery, or the like, which is not specifically limited in the present disclosure.

In some embodiments, the shell includes an end cover and a case, the case is provided with an opening, and the end cover closes the opening to form a closed space for accommodating substances such as the electrode assembly and the electrolyte. The case may be provided with one or a plurality of openings. One or a plurality of end covers may also be provided.

In some embodiments, the shell is provided with at least one electrode terminal, and the electrode terminal is electrically connected to a tab. The electrode terminal can be directly connected to the tab, or can also be indirectly connected to the tab through the adapter plate. The electrode terminal may be arranged on the end cover, or may also be arranged on the case.

In some embodiments, the shell is provided with a pressure relief mechanism. The pressure relief mechanism is configured to release the internal pressure of the battery cell.

In the embodiment of the present disclosure, the battery may also be a single physical module including one or a plurality of battery cells to provide a higher voltage and capacity. When there are a plurality of battery cells, the plurality of battery cells are connected by series connection, or parallel connection, or parallel-series connection through a bus component.

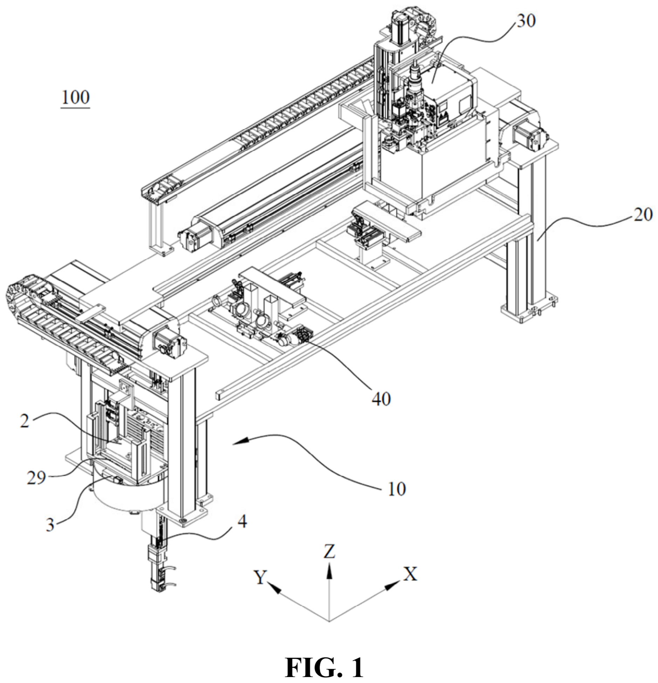

Some embodiments of the present disclosure are described in detail below with reference to FIG. 1 to FIG. 13.

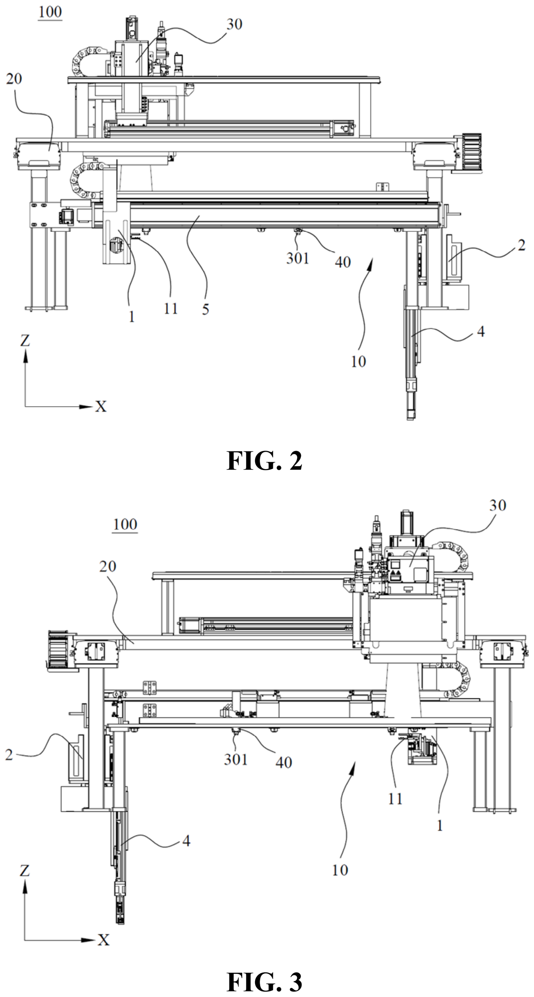

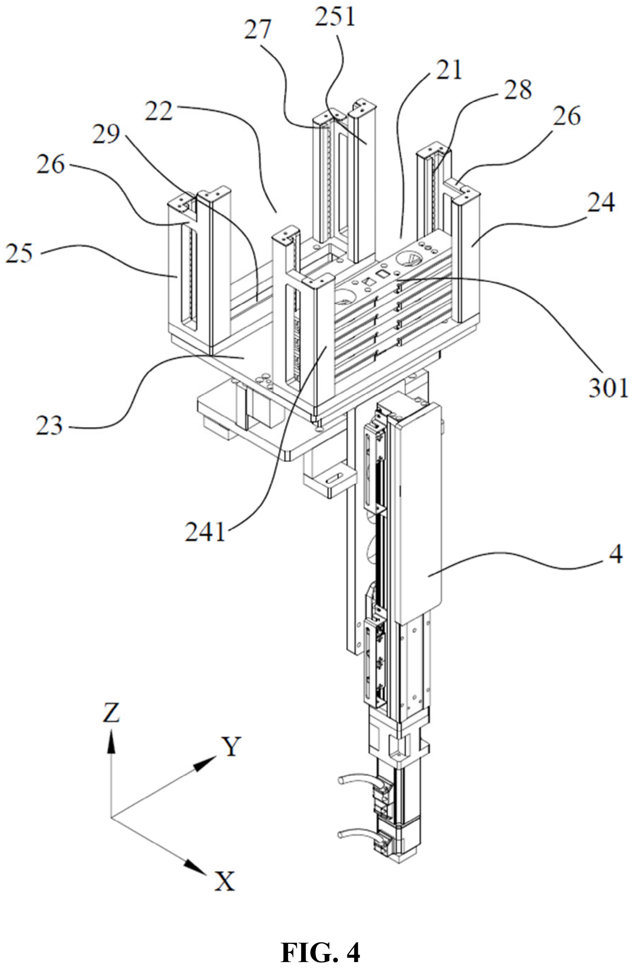

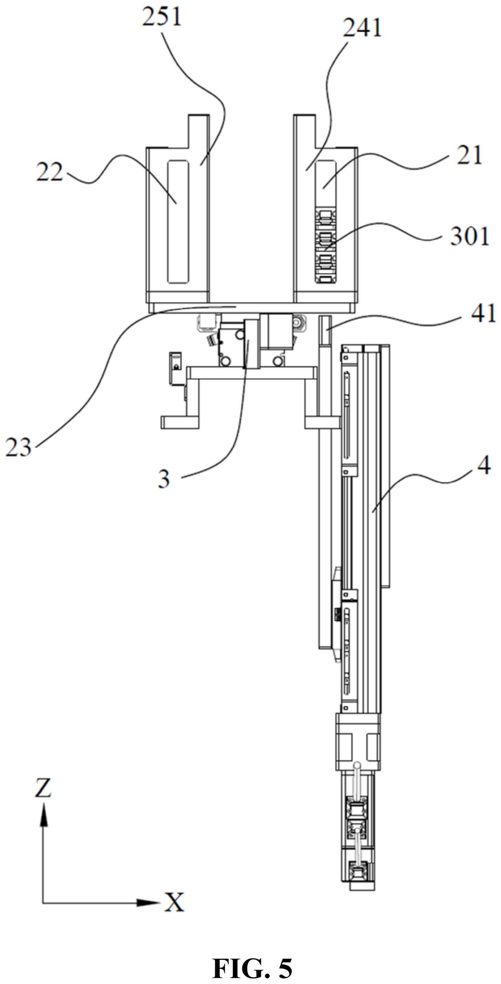

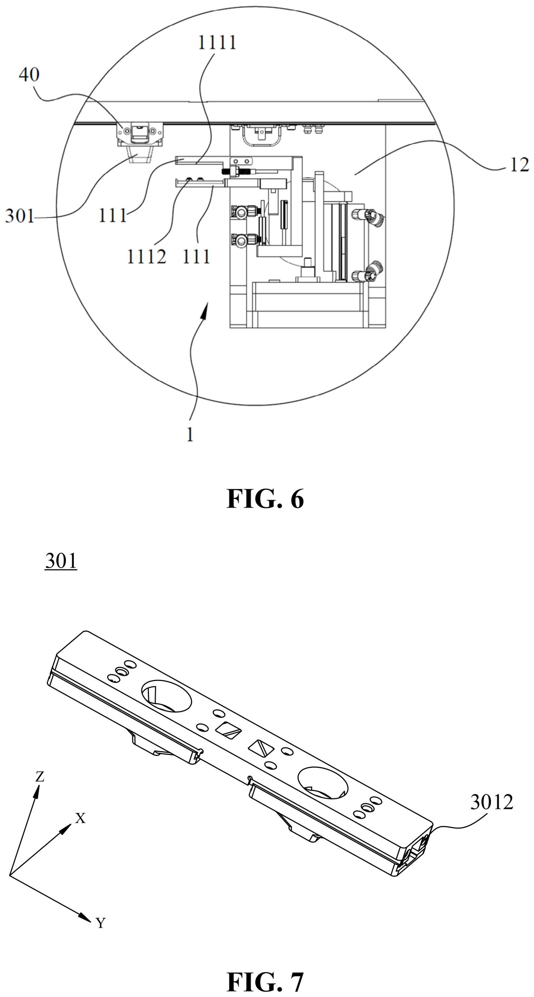

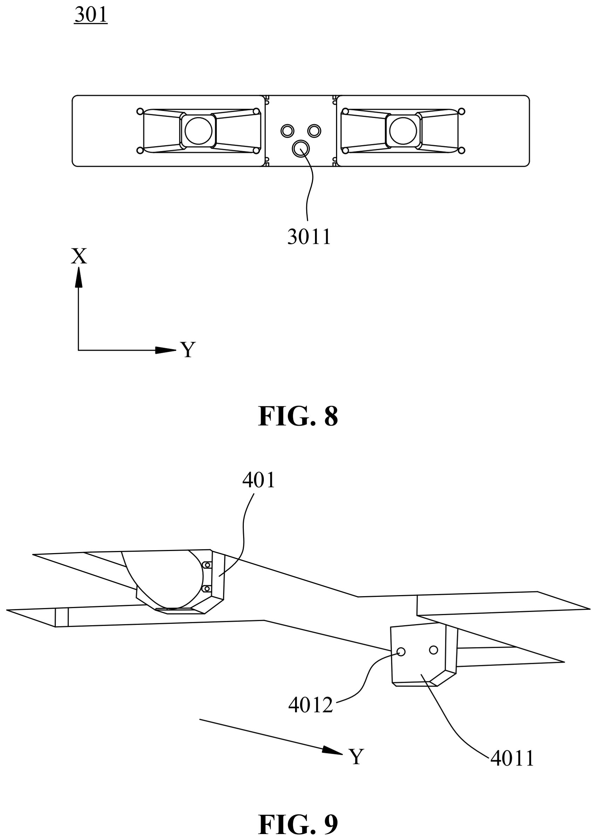

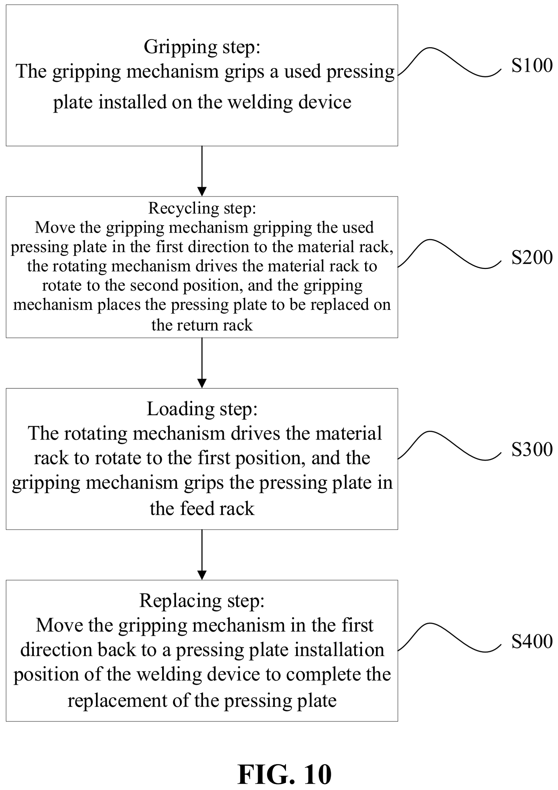

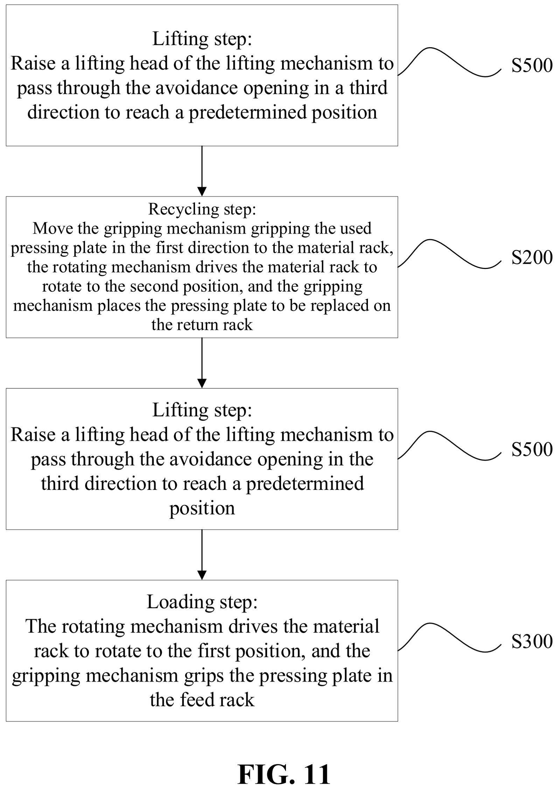

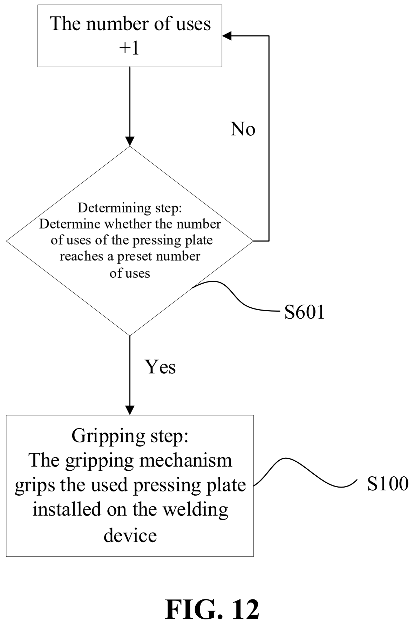

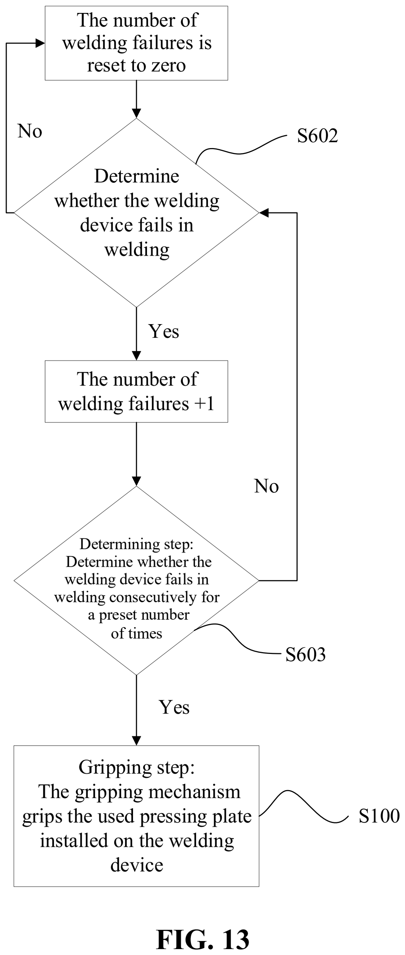

FIG. 1 is a schematic diagram of a three-dimensional structure of a welding device according to some embodiments of the present disclosure. FIG. 2 is a schematic diagram of a planar structure of a welding device according to some embodiments of the present disclosure. FIG. 3 is a schematic diagram of another planar structure of a welding device according to some embodiments of the present disclosure. FIG. 4 is a schematic diagram of a three-dimensional structure of a material rack and a rotating mechanism according to some embodiments of the present disclosure. FIG. 5 is a schematic diagram of a planar structure of a material rack and a rotating mechanism according to some embodiments of the present disclosure. FIG. 6 is a partially enlarged diagram of a gripping mechanism according to some embodiments of the present disclosure. FIG. 7 is a schematic diagram of a three-dimensional structure of a pressing plate according to some embodiments of the present disclosure. FIG. 8 is a schematic diagram of a planar structure of a pressing plate according to some embodiments of the present disclosure. FIG. 9 is a schematic diagram of a three-dimensional partial structure of a clamping apparatus according to some embodiments of the present disclosure. FIG. 10 is a first schematic flowchart of a pressing plate replacing method according to some embodiments of the present disclosure. FIG. 11 is a second schematic flowchart of a pressing plate replacing method according to some embodiments of the present disclosure. FIG. 12 is a third schematic flowchart of a pressing plate replacing method according to some embodiments of the present disclosure. FIG. 13 is a fourth schematic flowchart of a pressing plate replacing method according to some embodiments of the present disclosure.

In some embodiments of the present disclosure, for ease of explanation, a first direction, a second direction, and a third direction are set, and the first direction, the second direction, and the third direction are directions perpendicular to one another, but those skilled in the art should understand that the embodiments of the present disclosure are not limited to the situation where the three directions are perpendicular to one another. For ease of explanation, as shown by arrows in FIG. 1 to FIG. 5 and FIG. 7 to FIG. 9, the direction of an arrow X is the first direction, the direction of an arrow Y is the second direction, and the direction of an arrow Z is the third direction. The direction indicated by the arrow Z in the third direction is sometimes referred to as "upward", and the opposite direction is sometimes referred to as "downward".

As shown in FIG. 1 to FIG. 3, a first aspect of the present disclosure provides a pressing plate replacing apparatus 10. The pressing plate replacing apparatus 10 is configured to replace a pressing plate 301 installed on a welding device 100. The pressing plate replacing apparatus 10 includes a gripping mechanism 1, a material rack 2, and a rotating mechanism 3. The gripping mechanism 1 is configured to grip the pressing plate 301, and the gripping mechanism 1 is capable of reciprocating in the first direction. The material rack 2 is located at one side of the welding device 100 in the first direction, and the material rack 2 includes a feed rack 21 configured to store unused pressing plates and a return rack 22 configured to recycle used pressing plates. The rotating mechanism 3 is connected to the material rack 2 and is configured to drive the material rack 2 to rotate. The material rack 2, driven by the rotating mechanism 3, is capable of being switched between a first position and a second position. When the material rack 2 is in the first position, the feed rack 21 faces the gripping mechanism 1. When the material rack 2 is in the second position, the return rack 22 faces the gripping mechanism 1.

The pressing plate 301 is configured to press and tighten a workpiece to be welded during a welding operation to reduce the possibility that the workpiece to be welded moves relative to the welding device 100 or the workpieces to be welded move relative to each other, thereby affecting the welding quality. Moreover, in the welding process, a large amount of impurities such as splashed welding slag may be generated. The pressing plate 301 may gradually be contaminated by these impurities during use. Therefore, it is necessary to replace and clean it regularly. If the pressing plate 301 cannot be replaced in time, impurities may be excessively attached to a welding channel of the pressing plate 301, so that laser cannot pass through the welding channel smoothly, or a defocused focal point is caused to shift, which may lead to poor welding, false welding, and other adverse conditions, thereby affecting the welding quality.

The pressing plate 301 may be fixed on a rack 20 of the welding device 100, for example. There may be one or a plurality of pressing plates 301, which may be specifically set according to actual usage, and the quantity thereof is not specifically limited in the embodiment of the present disclosure.

In the related art, the pressing plate is usually replaced manually, which has a low degree of automation, and manual disassembling and installation is time-consuming and labor-intensive. The device needs to be shut down when replacing the pressing plate, thereby reducing the operating efficiency of the production line. In addition, the pressing plate replacing operation is usually carried out above the workpiece to be welded or near the workpiece to be welded. Manual pressing plate replacement may have the risk of misoperation, so that the pressing plate may fall onto the workpiece to be welded during the replacement to cause damage to or contamination on the workpiece, or the newly replaced pressing plate may fall and be contaminated with dust, welding slag, and other impurities, which requires the pressing plate to be replaced again, thereby increasing production costs and reducing the production efficiency.

Therefore, the embodiment of the present disclosure provides a pressing plate replacing apparatus 10 that is capable of replacing a pressing plate 301 in an automated manner. The pressing plate replacing apparatus 10 may be, for example, installed on the rack 20 of the welding device 100, so as to be capable of better replacing the pressing plate 301 in the welding process.

As shown in FIG. 1 to FIG. 3, the pressing plate replacing apparatus 10 includes the gripping mechanism 1 and the material rack 2.

The gripping mechanism 1 is configured to grip or place the pressing plate 301, and the material rack 2 is configured to store unused pressing plates and to recycle pressing plates to be cleaned after use. Specific structures of the gripping mechanism 1 and the material rack 2 may be described in detail later.

Specifically, the gripping mechanism 1 is capable of reciprocating in the first direction, and the material rack 2 is located at one side of the welding device 100 in the first direction. As shown in FIG. 2, in the embodiment of the present disclosure, the movement direction of the gripping mechanism 1 may be used as the first direction, and the material rack 2 is located on either side of the gripping mechanism 1 in the movement direction. In the specific example shown in FIG. 2, the left-right direction in the figure is the first direction. Therefore, when the pressing plate 301 needs to be replaced, the gripping mechanism 1 is capable of gripping the pressing plate 301 to be replaced, move in the first direction to the material rack 2, place the pressing plate 301 to be replaced on the material rack 2, grip a new unused or cleaned pressing plate 301 from the material rack 2, move back in the first direction to an installation position of the pressing plate 301, and place the new pressing plate 301 at the installation position, thereby completing the replacement of the pressing plate 301 in an automated manner. Moreover, when replacing the pressing plate 301, it is only necessary to stop the pressing plate 301 to be replaced, without the need to shut down the entire device, which is capable of effectively improving the operating efficiency.

In addition, compared with the manual replacement of the pressing plate, the gripping mechanism 1 of the pressing plate replacing apparatus 10 in the embodiment of the present disclosure is more reliable and stable when gripping the pressing plate 301, and the risk of misoperation is low. Thus, the possibility of adverse situations such as the pressing plate 301 falling off is capable of being reduced, which further reduces the production efficiency and reducing production costs.

The embodiment of the present disclosure does not specifically limit the movement manner of the gripping mechanism 1, as long as the gripping mechanism 1 is capable of reciprocating in the first direction, so as to be capable of gripping the pressing plate 301 and moving it between the material rack 2 and the installation position of the pressing plate.

For example, the gripping mechanism 1 can move in the first direction by a transmission method such as a guide rail slider transmission or a screw transmission.

As shown in FIG. 4 and FIG. 5, the material rack 2 includes the feed rack 21 and the return rack 22. The feed rack 21 is configured to store unused pressing plates 301, and the return rack 22 is configured to recycle used pressing plates 301. In the embodiment of the present disclosure, both the feed rack 21 and the return rack 22 are capable of storing a plurality of pressing plates 301, so that an operator does not need to frequently load the materials.

The pressing plate replacing apparatus 10 further includes the rotating mechanism 3, and the rotating mechanism 3 is located below the material rack 2, connected to the material rack 2, and capable of driving the material rack 2 to rotate.

The embodiment of the present disclosure does not impose any specific limitation on the connection method between the rotating mechanism 3 and the material rack 2. For example, it may be any suitable connection method such as fastening connection, snap connection, magnetic connection, or plug connection, as long as the rotating mechanism 3 is capable of driving the material rack 2 to rotate.

Specifically, the material rack 2, driven by the rotating mechanism 3, is capable of being switched between the first position and the second position. When the material rack 2 is in the first position, the feed rack 21 faces the gripping mechanism 1, thereby facilitating the gripping mechanism 1 to grip the unused pressing plate 301 from the feed rack 21. When the material rack 2 is in the second position, the return rack 22 faces the gripping mechanism 1, thereby facilitating the gripping mechanism 1 to place the used pressing plate 301 to be replaced on the return rack 22.

Therefore, switching between the feed rack 21 and the return rack 22 can be achieved only by simple rotation. The control method is simple and the switching is easy, which is capable of effectively improving the replacement efficiency. Furthermore, there is no need to arrange a plurality of material racks for supplying the pressing plates 301 or recycling the pressing plates 301 respectively. Only one material rack 2 is required and the supply and recycle of the pressing plates 301 can be achieved through the rotation of the material rack 2, which effectively reduces the production cost and improves the space utilization.

For example, the rotating mechanism 3 includes, but is not limited to, a rotating servo motor.

In some embodiments of the present disclosure, as shown in FIG. 4 and FIG. 5, the material rack 2 includes a bottom plate 23, a first position-limiting member 24, and a second position-limiting member 25. The first position-limiting member 24 and the second position-limiting member 25 extend in the third direction perpendicular to the first direction and are arranged on the bottom plate 23. The first position-limiting member 24 and a portion of the bottom plate 23 define the feed rack 21, and the second position-limiting member 25 and a portion of the bottom plate 23 define the return rack 22.

The bottom plate 23 is a bearing structure of the material rack 2, and the bottom plate 23 may be made of, for example, plastic, metal, profiles, or any other suitable material. The bottom plate 23 includes a bearing surface, and the bearing surface is configured to bear unused pressing plates and pressing plates to be cleaned after use. The bearing surface of the bottom plate 23 is substantially flat, which is thus conducive to providing a more stable bearing platform for the pressing plate 301.

In the embodiment of the present disclosure, the bottom plate 23 is generally in a rectangular shape, and the rectangular bottom plate 23 can fully utilize the space to arrange the feed rack 21 and the return rack 22. In other embodiments, the bottom plate 23 may also be in any other suitable shape such as a square, a circle, or a polygon, as long as it is capable of stably bearing the pressing plate 301. The embodiment of the present disclosure does not impose any specific limitation on the shape of the bottom plate 23.

The first position-limiting member 24 and the second position-limiting member 25 are arrange on the bottom plate 23, and are configured to limit the pressing plate 301 on the bottom plate 23 of the material rack 2, thereby reducing the possibility of the pressing plate 301 falling off the material rack 2. In addition, the first position-limiting member 24 and the second position-limiting member 25 are further capable of separating the feed rack 21 from the return rack 22, so that an unused pressing plate and a used pressing plate are capable of being well distinguished.

For example, the first position-limiting member 24 and/or the second position-limiting member 25 may be arranged on the bottom plate 23 by any suitable connection method such as fastening connection, snap connection, and plug connection.

In the embodiment of the present disclosure, the first position-limiting member 24 and the second position-limiting member 25 extend in the third direction, the first position-limiting member 24 and a portion of the bottom plate 23 define the feed rack 21, and the second position-limiting member 25 and a portion of the bottom plate 23 define the return rack 22.

Therefore, the pressing plates accommodated in the feed rack 21 of the material rack 2 and the pressing plates accommodated in the return rack 22 of the material rack 2 are capable of being stacked in the third direction, so that the material rack 2 is capable of accommodating more pressing plates 301, and the operator does not need to perform replacement frequently.

Specifically, unused pressing plates are stored in the feed rack 21 defined by the first position-limiting member 24 and a portion of the bottom plate 23, and used pressing plates are stored in the return rack 22 defined by the second position-limiting member 25 and a portion of the bottom plate 23, openings are formed on upper parts of both the feed rack 21 and the return rack 22. The unused pressing plates stacked in the feed rack 21 are capable of being taken out in sequence through the opening on the upper part of the feed rack 21, and the used pressing plates are capable of being placed in the return rack 22 in sequence through the opening on the upper part of the return rack 22.

For example, a sensor may be arranged above the material rack 2, and the sensor is configured to detect the quantities of pressing plates 301 in the feed rack 21 and the return rack 22. When the sensor detects that there is no pressing plate 301 in the feed rack 21 or when the sensor detects that the return rack 22 is full of the pressing plates, a prompt signal is sent to prompt the operator to replenish the pressing plates 301 in the feed rack 21 in time or to prompt the operator to take out the pressing plates 301 in the return rack 22 in time for cleaning and replacement.

The prompt signal includes, but is not limited to, a visual prompt signal of a flashing indicator, an auditory prompt signal of a sound alarm, a prompt box popping up in a host computer, or the like.

In addition, the type of sensor is not specifically limited in the embodiment of the present disclosure, as long as it is capable of detecting the quantities of pressing plates 301 in the feed rack 21 and the return rack 22.

In some embodiments of the present disclosure, there are two first position-limiting members 24, the two first position-limiting members 24 are arranged at an interval on the bottom plate 23 in the second direction, each of the first position-limiting members 24 includes two first columns 241 arranged at an interval in the first direction, and the size of one first column 241 in the third direction is larger than the size of the other first column 241 in the third direction, and/or there are two second position-limiting members 25, the two second position-limiting members 25 are arranged on the bottom plate 23 at an interval in the second direction, each of the second position-limiting members 25 includes two second columns 251 arranged at an interval in the first direction, and the size of one second column 251 in the third direction is larger than the size of the other second column 251 in the third direction. The second direction is perpendicular to both the first direction and the third direction.

In some embodiments, the spacing direction between the first position-limiting member 24 and the second position-limiting member 25 may be the first direction, the spacing direction between the columns included in the first position-limiting member 24 and the spacing direction between the columns included in the second position-limiting member 25 may be the second direction, and the second direction may also be consistent with a length direction of the pressing plate 301. When the pressing plates 301 are stacked to overlap each other as shown in FIG. 4 and FIG. 5, the stacking direction of the pressing plates 301 may be the third direction.

In the specific examples shown in FIG. 4 and FIG. 5, an up-down direction in FIG. 4 is the third direction of the embodiment of the present disclosure, and a direction perpendicular to a paper surface in FIG. 5 is the second direction of the embodiment of the present disclosure. The two first position-limiting members 24 are arranged on the bottom plate 23 at an interval in the second direction, and the two first position-limiting members 24 and the bottom plate 23 together define the feed rack 21 configured to accommodate unused pressing plates. For example, at least one crossbeam 26 extending in the first direction may be arranged between the two first position-limiting members 24. In this way, the structural stability of the feed rack 21 is capable of being improved.

Likewise, the two second position-limiting members 25 are arranged on the bottom plate 23 at an interval in the second direction, and the two second position-limiting members 25 and the bottom plate 23 together define the return rack 22 configured to accommodate used pressing plates. For example, at least one crossbeam 26 extending in the first direction may be arranged between the two second position-limiting members 25. In this way, the structural stability of the return rack 22 is capable of being improved.

The embodiment of the present disclosure does not impose a specific limit on the quantity of the crossbeams 26, which can be specifically set according to the actual sizes of the feed rack 21 and the return rack 22.

Such method of arranging the first position-limiting members 24 and the second position-limiting members 25 at an interval in the second direction in the embodiment of the present disclosure is capable of enabling the operator to more intuitively view the quantities and statuses of the pressing plates 301 in the feed rack 21 and the return rack 22, so that it is easier for the operator to perform subsequent processing.

Of course, those skilled in the art should understand that in other embodiments, the two first position-limiting members 24 arranged at an interval in the second direction may also be formed into an integral structure as a whole, and the two second position-limiting members 25 arranged at an interval in the second direction may also be formed into an integral structure as a whole. In other words, the feed rack 21 and the return rack 22 are generally formed into closed structures each having an opening at the top.

When the pressing plates 301 are stacked and placed in the feed rack 21, and the gripping mechanism 1 needs to grip the unused pressing plate 301, the gripping operation can be performed by moving the gripping mechanism 1 in the third direction, or the pressing plate 301 in the feed rack 21 can be lifted to the vicinity of the gripping mechanism 1 by a lifting mechanism, and then the gripping mechanism 1 performs the gripping operation. Similarly, when the gripping mechanism 1 needs to place the used pressing plate into the return rack 22, the gripping mechanism 1 can be moved in the third direction to perform the placement operation, or a lifting head of the lifting mechanism may be lifted to the vicinity of the gripping mechanism 1 (in the case where there is no pressing plate 301 in the return rack 22), and then the gripping mechanism 1 performs the placement operation, or the pressing plate 301 in the return rack 22 may be lifted to the vicinity of the gripping mechanism 1 by the lifting mechanism (in the case where there is a pressing plate 301 in the return rack 22), and then the gripping mechanism 1 performs the placement operation.

In the embodiment of the present disclosure, the pressing plate replacing apparatus 10 includes the lifting mechanism (which will be described in detail later), and when the gripping mechanism 1 needs to grip the pressing plate 301 from the feed rack 21 or needs to place the pressing plate 301 on the return rack 22, the corresponding gripping or placing operation may be achieved through cooperation with the lifting mechanism. When lifting, the lifting mechanism needs to at least lift the pressing plate 301 or its lifting head in the third direction beyond the first position-limiting member 24 or beyond the second position-limiting member 25. In this way, the gripping mechanism 1 is less likely to interfere with the first position-limiting member 24 or the second position-limiting member 25 when gripping the pressing plate 301 or placing the pressing plate 301, thereby improving the stability of the gripping mechanism 1. However, when the pressing plate 301 is lifted by the lifting mechanism beyond a position-limiting member, or the gripping mechanism 1 places the pressing plate 301 on the lifting head beyond the position-limiting member, the pressing plate 301 is easy to fall due to the lack of the position-limiting effect of the position-limiting member.

Therefore, as shown in FIG. 4 and FIG. 5, in the embodiment of the present disclosure, each of the first position-limiting members 24 includes two first columns 241 arranged at an interval in the first direction, and the size of one first column 241 in the third direction is larger than the size of the other first column 241 in the third direction, and each of the second position-limiting members 25 includes two second columns 251 arranged at an interval in the first direction, and the size of one second column 251 in the third direction is larger than the size of the other second column 251 in the third direction.

When the gripping mechanism 1 grips or places the pressing plate 301, the column shorter in size in the third direction faces the gripping mechanism 1, and the lifting mechanism lifts the pressing plate 301 beyond the column shorter in size in the third direction but not beyond the column longer in size in the third direction, or the lifting head exceeds the column shorter in size in the third direction but not beyond the column longer in size in the third direction. In this way, when the pressing plate 301 is lifted or the pressing plate 301 is supported on the lifting head, one end thereof in the first direction is exposed outside the column, and the other end still presses against the column longer in size in the third direction, so that the gripping mechanism 1 is capable of gripping the pressing plate 301 or place the pressing plate 301 from the side of the column shorter in size in the third direction, which is more convenient for the gripping and placing operation of the gripping mechanism 1. At the same time, the column longer in size in the third direction may further play a good position-limiting role on the pressing plate 301, so that the pressing plate 301 may not fall off the material rack 2 in the process of being gripped or placed, thereby improving the stability and reliability of the pressing plate replacing apparatus 10.

Specifically, the first column 241 longer in size in the third direction in the first position-limiting member 24 and the second column 251 longer in size in the third direction in the second position-limiting member 25 are arranged close to each other in the first direction. The first column 241 shorter in size in the third direction in the first position-limiting member 24 and the second column 251 shorter in size in the third direction in the second position-limiting member 25 are arranged away from each other in the first direction.

Therefore, no matter the material rack 2 is in the first position or the second position, the columns shorter in size in the third direction are capable of being close to the gripping mechanism 1, and the columns longer in size in the third direction are capable of being away from the gripping mechanism 1, thereby facilitating the gripping mechanism 1 to grip or place the pressing plate 301 and making it less likely for the pressing plate 301 to fall when being gripped or placed.

In some embodiments of the present disclosure, as shown in FIG. 4, the first column 241 and the second column 251 are each provided with a groove 27 extending in the third direction, a plurality of balls 28 are rotatably arranged in the groove 27, each of the balls 28 is at least partially exposed to the groove 27, and the exposed portion of each of the balls 28 is configured to contact with a side surface of the pressing plate 301.

In this way, the friction of the pressing plates 301 stacked and accommodated in the material rack 2 when moving in the third direction can be reduced, so that the pressing plate 301 can move more smoothly in the third direction, and it is less likely for the pressing plate 301 to get stuck during the movement, which makes it easier for the gripping mechanism 1 to grip or place the pressing plate 301 during the gripping operation.

In some embodiments of the present disclosure, the bottom plate 23, the first position-limiting member 24, and the second position-limiting member 25 are formed into an integrated structure.

In this way, it is capable of reducing the quantity of parts, lowering the difficulty in assembling, and making the overall structure of the material rack 2 more stable.

Of course, those skilled in the art should understand that in other embodiments, the bottom plate 23, the first position-limiting member 24, and the second position-limiting member 25 may also be split structures and assembled together.

In some embodiments of the present disclosure, the feed rack 21 and the return rack 22 are each provided with an avoidance opening 29 extending in the third direction. The pressing plate replacing apparatus 10 further includes a lifting mechanism 4, and the lifting mechanism 4 is located below the material rack 2. The avoidance opening 29 is configured for a lifting head 41 of the lifting mechanism 4 to pass through. The lifting head 41 is configured to support the pressing plate 301 so as to lift the pressing plate 301 of the feed rack 21 or to receive the pressing plate 301 recycled to the return rack 22.

The lifting mechanism 4 includes a lifting drive apparatus and the lifting head 41. The lifting drive apparatus is capable of driving the lifting head 41 to move in the third direction, thereby lifting the pressing plate 301 on the material rack 2 or supporting the pressing plate 301 placed on the material rack 2.

For example, the lifting drive apparatus includes, but is not limited to, a lifting cylinder.

When the gripping mechanism 1 needs to grip an unused pressing plate 301 from the feed rack 21, the lifting head 41 of the lifting mechanism 4 is capable of being raised in the third direction, passing through the avoidance opening 29 of the feed rack 21, and lifting the pressing plate 301 in the feed rack 21 to the vicinity of the gripping mechanism 1, so that the gripping mechanism 1 is capable of gripping the stacked pressing plates 301 in sequence without moving in the third direction, which is more convenient for the gripping mechanism 1 to perform the gripping operation,. Moreover, after the gripping mechanism 1 completes the gripping operation, the lifting head 41 of the lifting mechanism 4 descends in the third direction, so that the remaining stacked pressing plates 301 are capable of falling back smoothly and being stored in the feed rack 21.

When the gripping mechanism 1 needs to place the pressing plate 301 on the return rack 22, the lifting head 41 of the lifting mechanism 4 is also capable of being raised in the third direction, passing through the avoidance opening 29 of the return rack 22, and being raised to the vicinity of the gripping mechanism 1 to support the pressing plate 301. After supporting the pressing plate 301, the lifting head 41 of the lifting mechanism 4 descends in the third direction together with the supported pressing plate 301, so that the pressing plate 301 is capable of being smoothly recycled into the return rack 22, thereby reducing the possibility that the pressing plate 301 fails to be placed in the return rack 22 or directly falls into the return rack 22 and causes damage to the pressing plate 301.

Those skilled in the art should understand that when there is no pressing plate 301 in the return rack 22, the gripping mechanism 1 directly places the pressing plate 301 on the lifting head 41, and when there is a pressing plate 301 in the return rack 22, the lifting head 41 of the lifting mechanism 4 may lift the pressing plate 301 in the return rack 22 to the vicinity of the gripping mechanism 1, and the gripping mechanism 1 directly places the pressing plate 301 in a stacked manner on the lifted pressing plate 301, thereby completing the placement operation.

The lifting head 41 of the lifting mechanism 4 has a supporting surface, and the supporting surface is configured to contact with the pressing plate 301 so as to support the pressing plate 301. In the embodiment of the present disclosure, the supporting surface of the lifting head 41 is generally flat, which is capable of improving the stability of the pressing plate 301 supported thereon and reducing the possibility of falling of the pressing plate 301. In addition, the shape of the supporting surface is generally rectangular, and the rectangular supporting surface has a larger contact area with the pressing plate 301, which is further capable of increasing the stability of the pressing plate 301 supported thereon.

Of course, in other embodiments, the supporting surface of the lifting head 41 may also be square, circular, or in any other suitable shape, and the shape of the supporting surface is not specifically limited in the embodiment of the present disclosure.

The shapes of the avoidance opening 29 of the feed rack 21 and the avoidance opening 29 of the return rack 22 may be the same as or different from the shape of the supporting surface of the lifting head 41, as long as the lifting head 41 can pass through them.

In some embodiments of the present disclosure, as shown in FIG. 2, the pressing plate replacing apparatus 10 further includes a guide rail 5, the guide rail 5 extends in the first direction, and the gripping mechanism 1, driving by a first driving apparatus, is arranged on the guide rail 5 in a manner of being capable of moving along the guide rail *5.*

The first driving apparatus includes, but is not limited to, a motor. As a specific example, the first driving apparatus may be a servo motor.

The guide rail 5 may be fixedly arranged on a rack 20 of the welding device 100, for example.

The guide rail 5 is usually a slot or ridge made of metal or another suitable material, and is mainly used in situations of linear reciprocating motion. The guide rail 5 can bear, fix, and guide moving parts or apparatuses, and reduce friction during their movement.

Therefore, the gripping mechanism 1 is capable of realizing reciprocating motion in the first direction by cooperating with the guide rail 5, which has a simple structure and ingenious design. In addition, providing the guide rail 5 is capable of reducing friction and shaking when the gripping mechanism 1 moves in the first direction, thereby making the movement of the gripping mechanism 1 smoother and more stable, more reliable, and with less energy consumption, which is more conducive to energy saving and environmental protection.

Specifically, the gripping mechanism 1 may include a sliding member (not shown in the figure) on a side facing the guide rail 5, and the sliding member is arranged on the guide rail 5 in a manner of being capable of reciprocating along the guide rail 5 in the first direction. The sliding member may be formed as an integral structure with the gripping mechanism 1, or may be a separate structure from the gripping mechanism 1 and assembled together. The sliding member includes, but is not limited to, a sliding plate, a sliding block, a sliding rod, or a sliding assembly composed of a plurality of structures.

In the embodiment of the present disclosure, the guide rail 5 is a ridge-shaped protrusion structure, the sliding member is provided with a groove, and the sliding member is capable of reciprocating along the guide rail 5 through the cooperation between the groove and the ridge-shaped protrusion structure of the guide rail 5.

In other embodiments, the guide rail 5 may also be in a groove shape, the sliding member is provided with a protruding portion, and the sliding member is capable of reciprocating along the guide rail 5 by dragging the protruding portion and the cooperation with the groove of the guide rail 5.

The embodiment of the present disclosure does not specifically limit the quantity of the guide rails 5, and only one guide rail 5 may be arranged, or a plurality of guide rails 5 (more than one) may be arranged at intervals in the third direction, as long as the gripping mechanism 1 is capable of moving along the guide rail 5.

Those skilled in the art should understand that when there are a plurality of guide rails 5, there should be sliding members of a corresponding quantity equal to the quantity of the guide rails 5. Alternatively, when there is only one sliding member, the sliding member should be provided with matching structures (for example, grooves or protruding portions) of a corresponding quantity equal to the quantity of the guide rails 5, so that the one sliding member is capable of moving along the plurality of guide rails 5.

In some embodiments of the present disclosure, as shown in FIG. 6, the gripping mechanism 1 includes a clamping jaw 11, and the clamping jaw 11 includes two clamp plates 111 arranged oppositely in the third direction, the two clamp plates 111 are capable of approaching or moving away from each other oppositely in the third direction under the drive of a first clamping driving apparatus, an operation of clamping the pressing plate 301 is performed by the approaching action, and an operation of releasing the pressing plate 301 is performed by the moving away action. The third direction is perpendicular to the first direction.

The clamping jaw 11 includes two clamp plates 111, and the two clamp plates 111 are capable of oppositely approaching or moving away from each other in the third direction; therefore, the clamping and releasing actions of the clamping jaw 11 are capable of being achieved with a simple structure and simple actions. Moreover, the gripping mechanism 1 realizes gripping or releasing by the two clamp plates 111 approaching or moving away from each other, and therefore, it is capable of adapting to pressing plates 301 of different dimensions by adjusting a distance (or moving amplitude) between the two clamp plates 111 when they approach or move away from each other, thereby having good compatibility and being conducive to flexible production.

Specifically, the gripping mechanism 1 further includes a moving platform 12, and the clamping jaw 11 and the first clamping driving apparatus are arranged on the moving platform 12. The moving platform 12 is arranged on the guide rail 5 in a manner of being capable of moving along the guide rail 5, thereby being capable of driving the clamping jaw 11 and other components arranged on the moving platform 12 to move in the first direction. In this way, when the pressing plate 301 needs to be replaced, the moving platform 12 moves in the first direction to the vicinity of the installation position of the pressing plate 301, and realizes the gripping operation by the action of the two clamp plates 111 of the clamping jaw 11 approaching each other, and grips the pressing plate 301 to be replaced. After the clamping jaw 11 grips the pressing plate 301, the moving platform 12 moves in the first direction to the vicinity of the material rack 2, and the material rack 2 rotates to the second position under the drive of the rotating mechanism 3. The clamping jaw 11 places the pressing plate 301 to be replaced in the return rack 22 of the material rack 2 by the action of the two clamp plates 111 moving away from each other, thereby completing the recycle of the pressing plate 301 after use. Then, the material rack 2 driven by the rotating mechanism 3 rotates to the first position, and the clamping jaw 11 grips the unused pressing plate 301 in the feed rack 21 by the action of the two clamp plates 111 approaching each other. After the gripping is completed, the moving platform 12 moves back to the installation position of the pressing plate 301 in the first direction again to complete the replacement operation of the pressing plate 301.

The first clamping driving apparatus includes, but is not limited to, a motor.

In some embodiments of the present disclosure, as shown in FIG. 6, each of the clamp plates 111 includes a clamp surface 1111, and the two clamp surfaces 1111 are respectively configured to contact with two surfaces of the pressing plate 301 that are opposite to each other in the third direction. A first position-limiting portion 1112 is formed on at least one clamp surface 1111 of the two clamp surfaces 1111, and the first position-limiting portion 1112 is configured to cooperate with the pressing plate 301 during clamping of the pressing plate 301.

Therefore, the clamp operation can be achieved only by the contact between the clamp surfaces 1111 and the surfaces of the pressing plate 301, the structure is simple, and the control method is easy.

In addition, the first position-limiting portion 1112 is formed on the clamp surface 1111, and therefore, the clamp plate 111 is capable of being made more stable when clamping the pressing plate 301, thereby reducing the possibility of the pressing plate 301 falling during the clamping.

Specifically, as shown in FIG. 6 and FIG. 8, the first position-limiting portion 1112 may be, for example, a convex column, and the surface of the pressing plate 301 in the third direction may be formed with a hole groove 3011, for example. When the clamping jaw 11 grips the pressing plate 301, the first position-limiting portion 1112 at least partially extends into the hole groove 3011 of the pressing plate 301, which plays a certain position-limiting role on the pressing plate 301, thereby preventing the pressing plate 301 from falling off in the gripping process. Moreover, through the cooperation between the first position-limiting portion 1112 and the hole groove 3011, the gripping mechanism 1 is capable of quickly positioning when gripping the pressing plate 301, thereby being capable of improving the gripping efficiency of the gripping mechanism 1.

In the embodiment of the present disclosure, there are three first position-limiting portions 1112, and there are also three hole grooves 3011 on the pressing plate 301. In other embodiments, there may be one, two, or more (more than three) first position-limiting portions 1112. Similarly, there may also be one, two, or more (more than three) hole grooves 3011. The quantities of the first position-limiting portions 1112 and the hole grooves 3011 are not specifically limited in the embodiment of the present disclosure, as long as the quantity of the hole grooves 3011 corresponds to the quantity of the first position-limiting portions 1112.

For example, a first position-limiting portion 1112 is formed on a clamp surface 1111 of a clamp plate 111 of the clamping jaw 11, and a hole groove 3011 is formed on a surface of the pressing plate 301 facing the third direction and corresponding to the first position-limiting portion 1112.

For another example, first position-limiting portions 1112 are formed on both clamp surfaces 1111 of the two clamp plates 111 of the clamping jaw 11, and hole grooves 3011 are formed on both surfaces of the pressing plate 301 that are opposite to each other in the third direction.

In some embodiments of the present disclosure, the clamping jaw 11 is capable of reciprocating between a retreat position and an operation position in the second direction under the drive of a second driving apparatus. The second direction is perpendicular to both the first direction and the third direction.

The second driving apparatus is capable of being arranged on the moving platform 12 of the gripping mechanism 1 to drive the clamping jaw 11 to move in the second direction. The second driving apparatus includes, but is not limited to, a motor.

Therefore, the clamping jaw 11 is capable of moving forward in the second direction to the operation position to clamp the pressing plate 301 when the pressing plate 301 needs to be replaced, and retreating in the second direction to the retreat position after the pressing plate 301 is replaced or when the pressing plate 301 does not need to be replaced, which does not interfere with the pressing plate 301 and will not affect a pressing operation of the pressing plate 301 during welding, thereby improving the reliability and stability of the pressing plate 301 during operation.

Here, the operation position of the clamping jaw 11 is the installation position of the pressing plate 301.

The second aspect of the present disclosure provides a welding device 100. As shown in FIG. 1 to FIG. 3, the welding device 100 includes a rack 20, a welding apparatus 30, at least one clamping apparatus 40, and the pressing plate replacing apparatus 10 provided according to the first aspect of the present disclosure. The welding apparatus 30 is arranged on the rack 20, and the welding apparatus 30 includes a laser head and a pressing plate 301. The clamping apparatus 40 is arranged on the rack 20, and the clamping apparatus 40 is configured to clamp and fix the pressing plate 301. The pressing plate replacing apparatus 10 is configured to replace the pressing plate 301.

The rack 20 is a supporting rack of the welding device 100, and is configured to carry various functional components and apparatuses for realizing functions of the welding device 100. For example, the welding apparatus 30, the clamping apparatus 40, and the pressing plate replacing apparatus 10 are all arranged on the rack 20.

The welding apparatus 30 is an apparatus for realizing the welding function of the welding device 100. In the embodiment of the present disclosure, the welding apparatus 30 includes the laser head, and is a laser welding apparatus that performs welding by laser. In other embodiments, the welding apparatus may also be an ultrasonic welding apparatus, a resistance welding apparatus, or the like.

The clamping apparatus 40 is the installation position of the pressing plate 301 mentioned above, and the pressing plate 301 is clamped and fixed to the welding device 100 by the clamping apparatus 40.

In the embodiment of the present disclosure, there are two clamping apparatuses 40, and the two clamping apparatuses 40 are arranged on the rack 20 of the welding device 100 at an interval in the first direction. There are also two pressing plates 301, and one pressing plate 301 is correspondingly clamped and fixed on one clamping apparatus 40. In this way, the welding device 100 is capable of performing welding operations on two groups of workpieces at the same time, thereby improving the welding efficiency.

Of course, those skilled in the art should understand that the quantities of clamping apparatuses 40 and pressing plates 301 are not specifically limited in the embodiment of the present disclosure. There may also be two, three, or more (more than three) clamping apparatuses 40 and pressing plates 301, which may be set according to the size of the welding device 100 and actual processing requirements.

For example, an identification code may be set on each pressing plate 301. The identification code may be, for example, a QR code, a bar code, or a radio frequency identification code, or another code having an identification function. The identification code is used to store information related to the pressing plate 301. Thus, the identification code is capable of being scanned by a scanning apparatus to trace the welding process of the workpiece, and the use status of the pressing plate 301 is also capable of being traced, so that the pressing plate 301 is capable of being repaired, maintained, and serviced in time to ensure the welding quality.

The pressing plate replacing apparatus 10 is configured to replace the pressing plate 301 clamped and fixed to the clamping apparatus 40. The welding device 100 includes the pressing plate replacing apparatus 10, and therefore, the pressing plate replacing apparatus 10 is capable of moving in the first direction to the vicinity of the pressing plate 301 to be replaced when the pressing plate 301 needs to be replaced, gripping the pressing plate 301 located at the clamping apparatus 40, and moving in the first direction to the material rack 2, releasing the pressing plate 301 and placing it in the return rack 22, then gripping a new pressing plate 301 from the feed rack 21, and moving in the first direction to the clamping apparatus 40, so as to replace the pressing plate 301 in an automated manner, thereby reducing the possibility that the pressing plate 301 is contaminated by welding slag during welding due to long-term use, which affects the welding quality.

The specific structure of the pressing plate replacing apparatus 10 may be obtained with reference to the embodiment provided in the first aspect of the present disclosure. The welding device 100 adopts all the technical solutions of the above embodiments, and therefore, it has at least all the beneficial effects brought by the technical solutions of the above embodiments, which will not be further described here.

In some embodiments of the present disclosure, the welding device 100 further includes a controller. The controller is configured to control the gripping mechanism 1 of the pressing plate replacing apparatus 10 to replace the pressing plate 301 when the number of uses of the pressing plate 301 reaches a preset number of times, or the controller is configured to control the gripping mechanism 1 of the pressing plate replacing apparatus 10 to replace the pressing plate 301 when the welding device 100 fails in welding consecutively for a preset number of times.

Therefore, the welding device 100 is capable of automatically determining, through the controller, whether the pressing plate 301 needs to be replaced, and when the pressing plate 301 needs to be replaced, controlling the pressing plate replacing apparatus 10 to automatically replace the pressing plate 301. In this way, whether it is the operation of replacing the pressing plate 301 or determining the timing of replacing the pressing plate 301, there is no need for manual real-time monitoring, so that the welding device 100 is more automated, the replacement efficiency is higher, and the stability of the welding device 100 is improved.

The preset number of uses of the pressing plate 301 is not specifically limited in the embodiment of the present disclosure, which may be set according to the actual use conditions of the mass production line.

For example, it may be initially set that when the number of uses of the pressing plate 301 reaches 500 times, the controller controls the pressing plate replacing apparatus 10 to replace the pressing plate 301 that has reached the predetermined number of uses. As the operation time of the welding device 100 increases, the amount of welding slag generated by welding may increase. At this time, the initially set preset number of times may be appropriately reduced. For example, when the number of uses of the pressing plate 301 reaches 400 times, the controller controls the pressing plate replacing apparatus 10 to replace the pressing plate 301 that has reached the preset number of times.

In addition, when the welding device 100 fails in welding consecutively for a preset number of times, the controller may also determine that the pressing plate 301 may need to be replaced and cleaned, and therefore, the pressing plate replacing apparatus 10 may be controlled to replace the pressing plate 301. The preset number of consecutive welding failures is not specifically limited in the embodiment of the present disclosure, for example, it may be twice, three times, or the like, so that a certain number of errors is capable of being reserved.

In some embodiments, as shown in FIG. 9, the clamping apparatus 40 includes two clamping members 401 arranged oppositely in the second direction, the two clamping members 401 are capable of approaching or moving away from each other oppositely in the second direction under the drive of a second clamping driving apparatus, an operation of clamping the pressing plate is performed by the approaching action, and an operation of releasing the pressing plate is performed by the moving away action. The second direction is perpendicular to the first direction.

Therefore, when the pressing plate 301 is in an operation state, the clamping operation is capable of being performed by the action of the two clamping members 401 of the clamping apparatus 40 approaching each other oppositely, so that the pressing plate 301 is capable of being stably fixed on the welding device 100, and a good clamping operation is achieved during the welding.

The second clamping driving apparatus includes, but is not limited to, a motor.

When the pressing plate 301 is in a to-be-replaced state, two clamp plates 111 of the clamping jaw 11 of the gripping mechanism 1 of the pressing plate replacing apparatus 10 may grip the pressing plate 301 by the action of approaching each other. After the gripping mechanism 1 grips the pressing plate 301, the two clamping members 401 are capable of moving away from each other oppositely to release the pressing plate 301, thereby facilitating the gripping mechanism 1 to transport the used pressing plate 301 to the return rack 22 for recycling.

In addition, when the gripping mechanism 1 grips the unused pressing plate 301 from the feed rack 21 and returns to the clamping apparatus 40, the clamping apparatus 40 clamps the pressing plate 301 by the action of the two clamping members 401 approaching each other, and then the two clamp plates 111 of the clamping jaw 11 of the gripping mechanism 1 move away from each other, thereby completing the replacement of the pressing plate 301.

The above operation is capable of preventing the pressing plate 301 from falling off in the replacement process, thereby further improving the stability of the pressing plate 301 during replacement.

Moreover, the clamping apparatus 40 realizes clamping or releasing by the two clamping members 401 approaching or moving away from each other, and therefore, it is capable of adapting to pressing plates 301 of different dimensions by adjusting a distance (or moving amplitude) between the two clamping members 401 when they approach or move away from each other, thereby having good compatibility and being conducive to flexible production.

In some embodiments of the present disclosure, as shown in FIG. 9, each of the clamping members 401 includes a clamping surface 4011, and the two clamping surfaces 4011 are respectively configured to contact with two surfaces of the pressing plate 301 that are opposite to each other in the second direction. A second position-limiting portion 4012 is formed on each of the two clamping surfaces 4011. The second position-limiting portion 4012 is configured to cooperate with the pressing plate 301 when the pressing plate 301 is clamped.

Therefore, the clamping operation can be achieved only by the contact between the clamping surfaces 4011 and the surfaces of the pressing plate 301, the structure is simple, and the control method is easy.

The clamping surface 4011 is generally flat. The second position-limiting portion 4012 is also formed on the clamping surface 4011, and therefore, the clamping apparatus 40 may be more stable when clamping the pressing plate 301, which further improves the reliability of the clamping apparatus 40 and reduces the possibility of the pressing plate 301 falling when clamped, thereby improving the stability of the pressing plate 301 during operation and obtaining a good welding effect.

Specifically, as shown in FIG. 7 and FIG. 9, the second position-limiting portion 4012 may be, for example, a convex column, and the surface of the pressing plate 301 in the second direction may be formed with a hole 3012, for example. When the clamping members 401 grip the pressing plate 301, the second position-limiting portion 4012 at least partially extends into the hole 3012 of the pressing plate 301, which plays a certain position-limiting role on the pressing plate 301, thereby preventing the pressing plate 301 from falling off in the clamping process. Moreover, through the cooperation between the second position-limiting portion 4012 and the hole 3012, the clamping apparatus 40 is capable of quickly positioning when clamping the pressing plate 301, so that the clamping position of the pressing plate 301 is accurate, thereby improving the reliability of welding.

In the embodiment of the present disclosure, there are two second position-limiting portions 4012, and there are also two holes 3012 on the pressing plate 301. In other embodiments, there may also be one, two, or more (more than three) second position-limiting portions 4012. Similarly, there may also be one, two, or more (more than three) holes 3012. The quantities of the second position-limiting portions 4012 and the holes 3012 are not specifically limited in the embodiment of the present disclosure, as long as the quantity of the holes 3012 corresponds to the quantity of the second position-limiting portions 4012.

A third aspect of the present disclosure provides a pressing plate replacing method, using a pressing plate replacing apparatus 10 to replace a pressing plate 301 installed on a welding device 100, and the pressing plate replacing apparatus 10 includes a gripping mechanism 1, a material rack 2, and a rotating mechanism 3. The gripping mechanism 1 is capable of reciprocating in a first direction. The material rack 2 includes a feed rack 21 configured to store pressing plates and a return rack 22 configured to recycle used pressing plates. The rotating mechanism 3 is connected to the material rack 2. The material rack 2, driven by the rotating mechanism 3, is capable of being switched between a first position and a second position. When the material rack 2 is in the first position, the feed rack 21 faces the gripping mechanism 1, and when the material rack 2 is in the second position, the return rack 22 faces the gripping mechanism 1. As shown in FIG. 10, the pressing plate replacing method includes:
S100: A gripping step, where the gripping mechanism is made to grip a used pressing plate installed on the welding device.
S200: A recycling step, where the gripping mechanism that grips the used pressing plate is made to move in the first direction to the material rack, the rotating mechanism drives the material rack to rotate to the second position, and the gripping mechanism places the pressing plate to be replaced on the return rack.
S300: A loading step, where the rotating mechanism drives the material rack to rotate to the first position, and the gripping mechanism is made to grip the pressing plate in the feed rack.
S400: A replacing step, where the gripping mechanism is made to move in the first direction back to a pressing plate installation position of the welding device to complete the replacement of the pressing plate.

Therefore, there is no need for an operator to manually replace the pressing plate 301 to be replaced. The pressing plate replacing apparatus 10 is capable of replacing the pressing plate 301 in an automated manner, having a simple structure, being easy to control, and being conducive to improving the replacement efficiency of the pressing plate 301.

In addition, compared with the manual replacement of the pressing plate, the gripping mechanism 1 of the pressing plate replacing apparatus 10 in the embodiment of the present disclosure is more reliable and stable when gripping the pressing plate 301, and the risk of misoperation is low. Thus, the possibility of adverse situations such as the pressing plate 301 falling off is capable of being reduced, which further reduces the production efficiency and reducing production costs.

In some embodiments of the present disclosure, the feed rack 21 and the return rack 22 are each provided with an avoidance opening 29. The pressing plate replacing apparatus 10 includes a lifting mechanism 4, and the lifting mechanism 4 is located below the material rack 2. As shown in FIG. 11, before the recycling step and/or before the loading step, the pressing plate replacing method further includes:
S500: A lifting step, where a lifting head of the lifting mechanism is raised to pass through the avoidance opening to a predetermined position in a third direction.

The third direction is perpendicular to the first direction.

Therefore, before the loading step is performed, it is capable of raising the lifting head 41 of the lifting mechanism 4 to the predetermined position in the third direction, thereby lifting the pressing plate 301 in the feed rack 21 to the gripping mechanism 1, which is convenient for the gripping mechanism 1 to grip a new pressing plate. Moreover, before the recycling step is performed, it is also capable of raising the lifting head 41 of the lifting mechanism 4 to the predetermined position in the third direction to support the pressing plate 301, thereby reducing the possibility of damage to the pressing plate 301 caused by the pressing plate 301 failing to be placed in the return rack 22 or directly falling into the return rack 22.

The predetermined position is a position where the gripping mechanism 1 is capable of gripping the pressing plate 301 or a position where the gripping mechanism 1 is capable of placing the pressing plate 301.

In the embodiment of the present disclosure, a lifting step is performed before both the recycling step and the loading step. In other embodiments, the lifting step may be performed only before the recycling step, or the lifting step may be performed only before the loading step.

In some embodiments of the present disclosure, as shown in FIG. 12 and FIG. 13, before the gripping step, the pressing plate replacing method further includes:
S601: A determining step of determining whether the number of uses of the pressing plate reaches a preset number of uses.

If the preset number of uses is reached, it is determined that the pressing plate is a pressing plate to be replaced, and the gripping step is performed. If the preset number of uses is not reached, the cumulative number of uses of the pressing plate 301 is increased by 1, and step S601 is performed again.

For example, the number of uses of the pressing plate 301 may be counted by a controller of the welding device 100, and when the number of uses of the pressing plate 301 reaches a preset number of uses, the gripping step is controlled to be performed.

Alternatively, before the gripping step, the pressing plate replacing method further includes:
S602: Determine whether welding of the welding device fails.

If it is determined that the welding device 100 fails in welding, the number of welding failures is increased by 1, and step S603 is performed continuously. If it is determined that the welding device 100 does not fail in welding, the number of welding failures is reset to zero, and the next step S602 is performed continuously.

S603: A determining step of determining whether the welding device fails in welding consecutively for a preset number of times.

If the welding fails consecutively for a preset number of times, it is determined that the pressing plate is a pressing plate to be replaced, and a gripping step is performed. If the number of consecutive welding failures does not reach the preset number of times, step S602 is performed again.

Those skilled in the art should understand that in the embodiment of the present disclosure, the two determining steps S602 and S603 may be performed simultaneously, and the gripping step may be performed if the determination condition of any determining step is met. Of course, in other embodiments, before the gripping step, only one of the determining steps may be performed.

Therefore, it is capable of determining, according to the determination result, whether the pressing plate 301 being used needs to be replaced, and when the pressing plate 301 needs to be replaced, the pressing plate replacing apparatus 10 is controlled to automatically replace the pressing plate 301 without the need for manual real-time monitoring, thereby making the welding device 100 more automated and the replacement efficiency higher.

It should be understood by those skilled in the art that in the above methods of the specific embodiments, the writing order of various steps does not imply a strict performing order to constitute any limitation on the implementation process. The specific order of performing the various steps should be determined by its function and possible internal logic.

Specific examples of some embodiments of the present disclosure are described below with reference to the accompanying drawings.

As a specific example, the pressing plate replacing apparatus includes a gripping shaft assembly (the gripping mechanism 1), a welding pressing plate bin (the material rack 2), and a rotating cylinder (the rotating mechanism 3). The welding pressing plate bin includes an unclean bin (the return rack 22) for placing clean pressing plates and a clean bin (the feed rack 21) for recycling unclean pressing plates. The gripping shaft assembly is capable of transporting an old pressing plate to the unclean bin and transporting the new pressing plate from the clean bin to a use position of the pressing plate by cooperating with the cylinder (the first driving apparatus). The welding pressing plate bin is capable of being rotated under the drive of the rotating cylinder.

The pressing plate replacing apparatus further includes a lifting shaft (the lifting mechanism 4) arranged below the welding pressing plate bin. When it is determined that the pressing plate at the use position needs to be replaced, the gripping shaft assembly moves to the use position under the drive of the corresponding cylinder, clamps and takes out the pressing plate at the use position, and transports the pressing plate to an unclean area. The lifting shaft below the welding pressing plate bin is raised to receive the uncleaned pressing plate that has been transported, and then descends so that the uncleaned pressing plate is recycled to the unclean bin. Then, the welding pressing plate bin rotates under the drive of the rotating cylinder, so that the clean bin turns to the gripping shaft assembly, and the lifting shaft is raised again to lift the clean pressing plate in the clean bin to the material picking height, so that the gripping shaft assembly is capable of gripping the clean pressing plate, and transporting the clean pressing plate to the use position again under the drive of the cylinder, thereby completing the pressing plate replacement operation.

There are two logics for determining whether the pressing plate in the use position needs to be replaced. One is determining based on the number of uses of the pressing plate, which is determined from the usage status of the mass production line. Initially, it may be set that the pressing plate is replaced when the number of uses of the pressing plate reaches 500 times, and the preset number of uses of the pressing plate may be changed according to actual usage. The other is determining based on the welding condition of the welding device. For example, when the welding device fails in welding two products consecutively, it may be directly determined that the pressing plate needs to be replaced.

The above embodiments are merely intended for illustrating rather than limiting the technical solutions of the present disclosure. Although the present disclosure has been described in detail with reference to the various embodiments above, those of ordinary skill in the art should understand that the technical solutions specified in the various embodiments above may still be modified, or some or all of the technical features therein may be equivalently substituted; and such modifications or substitutions do not cause the essence of the corresponding technical solutions to depart from the scope of the technical solutions of the various embodiments of the present disclosure and shall fall within the scope the present disclosure. In particular, the technical features mentioned in the various embodiments may be combined in any manner as long as there is no structural conflict.

## Claims

1. A pressing plate replacing apparatus configured to replace a pressing plate installed on a welding device, comprising:
a gripping mechanism configured to grip the pressing plate, wherein the gripping mechanism is capable of reciprocating in a first direction;
a material rack located at one side of the welding device in the first direction, wherein the material rack comprises a feed rack configured to store unused pressing plates and a return rack configured to recycle used pressing plates; and
a rotating mechanism, wherein the rotating mechanism is connected to the material rack and configured to drive the material rack to rotate;
wherein the material rack, driven by the rotating mechanism, is capable of being switched between a first position and a second position, when the material rack is in the first position, the feed rack faces the gripping mechanism, and when the material rack is in the second position, the return rack faces the gripping mechanism.

2. The pressing plate replacing apparatus according to claim 1, wherein
the material rack comprises a bottom plate, a first position-limiting member, and a second position-limiting member, and the first position-limiting member and the second position-limiting member extend in a third direction perpendicular to the first direction and are arranged on the bottom plate; and
the first position-limiting member and a portion of the bottom plate define the feed rack, and the second position-limiting member and a portion of the bottom plate define the return rack.

3. The pressing plate replacing apparatus according to claim 2, wherein
there are two first position-limiting members, the two first position-limiting members are arranged on the bottom plate at an interval in a second direction, and each of the first position-limiting members comprises two first columns arranged at an interval in the first direction, the size of one first column in the third direction being larger than the size of the other first column in the third direction; and/or
there are two second position-limiting members, the two second position-limiting members are arranged on the bottom plate at an interval in the second direction, and each of the second position-limiting members comprises two second columns arranged at an interval in the first direction, the size of one second column in the third direction being larger than the size of the other second column in the third direction;
wherein the second direction is perpendicular to both the first direction and the third direction.

4. The pressing plate replacing apparatus according to claim 3, wherein
the first column longer in size in the third direction in the first position-limiting member and the second column longer in size in the third direction in the second position-limiting member are arranged close to each other in the first direction; and
the first column shorter in size in the third direction in the first position-limiting member and the second column shorter in size in the third direction in the second position-limiting member are arranged away from each other in the first direction.

5. The pressing plate replacing apparatus according to claim 3 or 4, wherein
the first column and the second column are each provided with a groove extending in the third direction, a plurality of balls are rotatably arranged in the groove, each of the balls is at least partially exposed to the groove, and the exposed portion of each of the balls is used to contact with a side surface of the pressing plate.

6. The pressing plate replacing apparatus according to any one of claims 2 to 5, wherein
the bottom plate, the first position-limiting member, and the second position-limiting member are formed into an integrated structure.

7. The pressing plate replacing apparatus according to any one of claims 1 to 6, wherein
the feed rack and the return rack are each provided with an avoidance opening extending in the third direction; and
the pressing plate replacing apparatus further comprises a lifting mechanism, the lifting mechanism is located below the material rack, the avoidance opening is configured to allow a lifting head of the lifting mechanism to pass through, and the lifting head is configured to support the pressing plate so as to lift the pressing plate of the feed rack or to receive the pressing plate recycled to the return rack.

8. The pressing plate replacing apparatus according to claim 7, wherein
the lifting head has a supporting surface, the supporting surface is configured to contact with the pressing plate so as to support the pressing plate, and the supporting surface is flat.

9. The pressing plate replacing apparatus according to any one of claims 1 to 8, wherein
a sensor is arranged above the material rack, and the sensor is configured to detect the quantities of the pressing plates in the feed rack and the return rack; and
when the sensor detects that there is no pressing plate in the feed rack or when the sensor detects that the return rack is full of the pressing plates, a prompt signal is sent.

10. The pressing plate replacing apparatus according to any one of claims 1 to 9, wherein
the pressing plate replacing apparatus further comprises a guide rail, the guide rail extends in the first direction, and the gripping mechanism is arranged on the guide rail in a manner of being capable of moving along the guide rail under the drive of a first driving apparatus.

11. The pressing plate replacing apparatus according to any one of claims 1 to 10, wherein
the gripping mechanism comprises a clamping jaw, and the clamping jaw comprises two clamp plates arranged oppositely in the third direction, the two clamp plates are capable of approaching or moving away from each other oppositely in the third direction under the drive of a first clamping driving apparatus, an operation of clamping the pressing plate is performed by the approaching action, and an operation of releasing the pressing plate is performed by the moving away action; and the third direction is perpendicular to the first direction.

12. The pressing plate replacing apparatus according to claim 11, wherein
each of the clamp plates comprises a clamp surface, and the two clamp surfaces are respectively configured to contact with two surfaces of the pressing plate that are opposite to each other in the third direction; and
a first position-limiting portion is formed on at least one clamp surface of the two clamp surfaces, and the first position-limiting portion is configured to cooperate with the pressing plate during clamping of the pressing plate.

13. The pressing plate replacing apparatus according to claim 11 or 12, wherein
the clamping jaw is capable of reciprocating between a retreat position and an operation position in the second direction under the drive of a second driving apparatus; and the second direction is perpendicular to both the first direction and the third direction.

14. A welding device, comprising:
a rack;
a welding apparatus arranged on the rack, wherein the welding apparatus comprises a laser head and a pressing plate;
at least one clamping apparatus arranged on the rack, wherein the clamping apparatus is configured to clamp and fix the pressing plate; and
the pressing plate replacing apparatus according to any one of claims 1 to 13, configured to replace the pressing plate.

15. The welding device according to claim 14, wherein
the welding device further comprises a controller;
the controller is configured to control the gripping mechanism of the pressing plate replacing apparatus to replace the pressing plate when the number of uses of the pressing plate reaches a preset number of times; or
the controller is configured to control the gripping mechanism of the pressing plate replacing apparatus to replace the pressing plate when the welding device fails in welding consecutively for a preset number of times.

16. The welding device according to claim 14 or 15, wherein
the clamping apparatus comprises two clamping members arranged oppositely in a second direction, the two clamping members are capable of approaching or moving away from each other oppositely in the second direction under the drive of a second clamping driving apparatus, an operation of clamping the pressing plate is performed by the approaching action, and an operation of releasing the pressing plate is performed by the moving away action; and the second direction is perpendicular to the first direction.

17. The welding device according to claim 16, wherein
each of the clamping members comprises a clamping surface, and the two clamping surfaces are respectively configured to contact with two surfaces of the pressing plate that are opposite to each other in the second direction; and
a second position-limiting portion is formed on each of the two clamping surfaces, and the second position-limiting portion is configured to cooperate with the pressing plate during clamping of the pressing plate.

18. A pressing plate replacing method, using a pressing plate replacing apparatus to replace a pressing plate installed on a welding device, wherein the pressing plate replacing apparatus comprises a gripping mechanism, a material rack, and a rotating mechanism, the gripping mechanism is capable of reciprocating in a first direction, the material rack comprises a feed rack configured to store pressing plates and a return rack configured to recycle used pressing plates, the rotating mechanism is connected to the material rack, the material rack, driven by the rotating mechanism, is capable of being switched between a first position and a second position, when the material rack is in the first position, the feed rack faces the gripping mechanism, and when the material rack is in the second position, the return rack faces the gripping mechanism; and
the pressing plate replacing method comprising:
a gripping step, wherein the gripping mechanism grips a used pressing plate installed on the welding device;
a recycling step, wherein the gripping mechanism gripping the used pressing plate moves in the first direction to the material rack, the rotating mechanism drives the material rack to rotate to the second position, and the gripping mechanism places the pressing plate to be replaced on the return rack;
a loading step, wherein the rotating mechanism drives the material rack to rotate to the first position, and the gripping mechanism grips the pressing plate in the feed rack; and
a replacing step, wherein the gripping mechanism moves in the first direction back to a pressing plate installation position of the welding device to complete the replacement of the pressing plate.

19. The pressing plate replacing method according to claim 18, wherein the feed rack and the return rack are each provided with an avoidance opening; the pressing plate replacing apparatus comprises a lifting mechanism, and the lifting mechanism is located below the material rack;
before the recycling step and/or before the loading step, the pressing plate replacing method further comprises:
a lifting step, wherein a lifting head of the lifting mechanism is raised to pass through the avoidance opening to a predetermined position in a third direction; and
the third direction is perpendicular to the first direction.

20. The pressing plate replacing method according to claim 18 or 19, wherein
before the gripping step, the pressing plate replacing method further comprises:
a determining step of determining whether the number of uses of the pressing plate reaches a preset number of uses, and if the preset number of uses is reached, determining that the pressing plate is a pressing plate to be replaced, and performing the gripping step; or, determining whether the welding device fails in welding consecutively for a preset number of times, and if the welding fails consecutively for the preset number of times, determining that the pressing plate is a pressing plate to be replaced, and performing the gripping step.
